# EUROPEAN PATENT APPLICATION

(11) **EP 0 619 338 A1**
(43) Date of publication of application: **12.10.1994**
(21) Application number: 94104768.0
(22) Date of filing: 25.03.1994
(51) Int. Cl.: C08K 5/00

(54) **Flame-retardant & heat-resistant materials**

(30) Priority: 07.04.1993 GB 9307274
(71) Applicant: ALBRIGHT & WILSON UK LIMITED, Oldbury, Warley, West Midlands B68 0NN (GB)
(72) Inventor: Agunloye, Francis 'Femi, Newport, Shropshire TF10 7LD (GB); Chilles, Colin Andrew, Bloxwich, Walsall, West Midlands WS3 3HU (GB); Williams, Collette, Bearwood, Warley, West Midland B67 5QZ (GB)
(74) Representative: Savidge, Roger Gordon Madgwick

(57) **Abstract**

Thermoplastic plastics materials are compounded with an additive comprising mono- or di-pentaerythritol and a melamine phosphate (e.g. dimelamine phosphate). This enhances the ability of these materials (especially when fabricated to make seating components in stadia, theatres etc) to resist both direct and radiant heat without excessive evolution of toxic fumes.

## Description

This invention relates to flame-retardant and heat-resistant materials, in particular to flame-retardant and heat-resistant plastics materials.

Plastics materials, especially thermoplastic plastics materials are frequently used in applications such as moulded seating components, e.g. for seating in stadia, theatres and the like. In a fire situation, many of the hitherto - used plastics materials have been found to exacerbate the fire either by their inherent flammability or, if not inherently flammable, by the evolution of toxic gases under the influence of both direct and radiant heat.

The present invention is concerned with the ability of thermoplastic plastics materials to resist both direct and radiant heat, without the evolution of excessive amounts of toxic (e.g. halogenated) fumes.

We have now found that certain thermoplastic plastics materials treated according to the present invention exhibit intumescence under the action of heat, especially radiant heat. A protective char is formed on the outer layer, thereby preventing further combustion.

Accordingly, the present invention provides a method for imparting flame-retardant and heat-resistant properties to a thermoplastic plastics material, in which the said plastics material is compounded with an additive comprising from 10 to 40% by weight mono-or dipentaerythritol and correspondingly from 90 to 60% by weight of a melamine phosphate.

The present invention also provides a flame-retardant and heat-resistant material made by the method described in the immediately preceding paragraph.

The present invention further provides a fabricated article comprising a flame-retardant and heat-resistant material made according to the aforesaid method.

The melamine phosphate may, for example, be dimelamine phosphate.

Suitably, the additive may comprise from 20 to 25% by weight of the mono-or dipentaerythritol and correspondingly from 80 to 75% by weight of the melamine phosphate.

Typically, the additive may comprise about 22% by weight dipentaerythritol and about 78% by weight of melamine phosphate. Preferably, the additive may be present relative to the plastics material in a ratio of from 25:75 to 50:50 by weight. For example, the ratio may be 40:60 by weight.

Preferably, the thermoplastic plastics material may consist essentially of polypropylene.

Alternatively, the thermoplastic plastics material may consist essentially of a thermoplastic polyurethane.
The materials made according to the present invention may be fabricated by means of blow-moulding, compression-moulding, injection-moulding or extrusion processes.

Fabricated articles made according to the present invention may include components for seating, and panelling, e.g. for surface tops and the like.

The present invention will be illustrated, merely by way of example, as follows:
Example 1 below is a formulation for a flame-retardant, non-coloured polypropylene and Example 2 below is a formulation for a flame-retardant, blue-coloured polypropylene.

### Example 1

| White Compound (F20) | |
|---|---|
| Component | % Composition |
| Melamine Phosphate | 31.2 |
| Dipentaerythritol | 8.8 |
| U.V. Stabilizer (1) | 0.5 (a) |
| U.V. Stabilizer (2) | 0.25 (b) |
| Polypropylene | 59.25 (c) |

| | |
|---|---|
| (a) supplied by Ciba-Geigy Ltd. as TINUVIN 770 (Regd. T.M.) | |
| (b) supplied by Ciba-Geigy Ltd. as TINUVIN 327 (Regd. T.M.) | |
| (c) supplied by Atochem Ltd. as 3010 GN5 | |

### Example 2

| Blue Compound (F21) | |
|---|---|
| Component | % Composition |
| Melamine Phosphate | 31.2 |
| Dipentaerythritol | 8.8 |
| U.V. Stabilizer (1) | 0.5 (a) |
| U.V. Stabilizer (2) | 0.25 (b) |
| Polypropylene 3010 GN5 | 58.75 (c) |
| Colour | 0.5 (d) |

| | |
|---|---|
| (a) supplied by Ciba-Geigy Ltd. as TINUVIN 770 (Regd. T.M.) | |
| (b) supplied by Ciba-Geigy Ltd. as TINUVIN 327 (Regd. T.M.) | |
| (c) supplied by Atochem Ltd. as 3010 GN5 | |
| (d) supplied by Wilson Colours Ltd. as 701-BU-50 | |

The formulations were made as follows:
Melamine phosphate and dipentaerythritol powders were dry blended in a ribbon blender prior to extrusion. The mixture was volumetrically metered to a twin screw compounder from one hopper.

From a second hopper, the required mixture of (a); (b); (c); and (d);, described below was volumetrically added to the compounder.
(a) Used in the form of a 50% masterbatch in polypropylene.
(b) Used as a 20% masterbatch in polypropylene.
(c) Used as a 10% masterbatch in polypropylene.
(d) Used as a 50% masterbatch in extra low density polyethylene (XLDPE).

The compounder was maintained at 190°C for all zones and run at 150 rpm.

The product was pelletised and moulded either by compression-moulding or blow-moulding to give articles suitable for flame testing.

The following sets of flame test were carried out on samples of Examples 1 and 2.
(i) UL-94 type tests were carried out on specimens with a thickness of 3.2mm.
(ii) Samples were submitted for testing under the Epiradiateur, NF P 92-501, conditions at CSTB, France.
(iii) BS 5852 type tests were carried out on moulded articles to a No 5 Crib standard.

| | UL-94 | Epiradiateur | No 5 Crib |
|---|---|---|---|
| EX1 | V-O | M3 | Pass |
| EX2 | V-O | M3 | Pass |

## Claims

1. A method for imparting flame-retardant and heat-resistant properties to a thermoplastic plastics material, characterised in that said plastics material is compounded with an additive comprising from 10 to 40% by weight mono-or dipentaerythritol and correspondingly from 90 to 60% by weight of a melamine phosphate.

2. A method according to Claim 1 characterised in that the additive comprises from 20 to 25% by weight mono-or dipentaerythritol and correspondingly from 80 to 75% by weight of a melamine phosphate.

3. A method according to Claim 1, characterised in that the additive comprises about 22% by weight dipentaerythritol and about 78% by weight of a melamine phosphate.

4. A method according to any one of the preceding claims, characterised in that the melamine phosphate is dimelamine phosphate.

5. A method according to any one of Claims 1 to 4, characterised in that the ratio of said additive to said plastics material is in the range 25:75 to 50:50 by weight.

6. A method according to Claim 5, characterised in that said ratio is about 40:60 by weight.

7. A method according to any one of the preceding claims, characterised in that said plastics material consists essentially of polypropylene.

8. A method according to any one of Claims 1 to 6, characterised in that said plastics material consists essentially of a thermoplastic polyurethane.
